# EUROPÄISCHE PATENTANMELDUNG

(11) **EP 0 984 406 A1**
(43) Veröffentlichungstag der Anmeldung: **08.03.2000**
(21) Anmeldenummer: 99117312.1
(22) Anmeldetag: 03.09.1999
(51) Int. Cl.: G07F 17/26, G07F 17/40, G03D 15/00, H04N 1/00

(54) **Verfahren zur Erstellung von Fotos**

(30) Priorität: 04.09.1998 DE 19840313
(71) Anmelder: CeWe Color AG & Co., D-26133 Oldenburg (DE)
(72) Erfinder: Schmidt-Sacht, Wulf, 26188 Edewecht (DE); Schwithal, Herman, 26133 Oldenburg (DE)
(74) Vertreter: Lauerwald, Jörg, Dipl.-Phys.

(57) **Zusammenfassung**

Die Erfindung betrifft ein Verfahren zur Erstellung von Fotos auf Fotopapier durch einen Fotofinisher auf der Grundlage von Bildinformationen, die analog auf einem Bildträger, insbesondere einem Papierfoto, einem Filmnegativ oder einem Dia vorliegen.

Der Erfindung liegt die Idee zugrunde, die durch die bereits bei den Fotohändlern vorhandene Digitalstationen gegebenen Möglichkeiten zum Nutzen der Endverbraucher zu erweitern. Bisher werden derartige Digitalstationen genutzt, um DigitalKameras auszulesen und von den vorhandenen Bilddaten Fotoabzüge zu erstellen.

Die Weiterentwicklung besteht darin, die Digitalstationen auch für herkömmliche, nicht digitale Filme nutzbar zu machen, und damit Nachbestellungen zu verbessern.

## Beschreibung

Die Erfindung betrifft ein Verfahren zur Erstellung von Fotos auf Fotopapier durch einen Fotofinisher (zentrales Fotolabor) auf der Grundlage von Bildinformationen, die analog auf einem Bildträger, insbesondere einem Papierfoto, einem Filmnegativ oder einem Dia vorliegen, gemäß des Oberbegriffs des Anspruchs 1.

Es gibt weiterhin und mit hohem Durchsetzungsgrad die bereits seit Jahrzehnten gebräuchliche Kamera, in die ein lichtempfindlicher Film, zumeist ein Kleinbildfilm, eingelegt wird. Dieser Film wird Aufnahme für Aufnahme belichtet und letztlich an ein Fotolabor abgegeben, um von den aufgenommenen Bildern Fotopapierabzüge oder im Einzelfalle auch Dias zu erstellen. Dabei führt der Weg zur Erstellung von Fotopapierabzügen über zunächst einmal aus dem lichtempfindlichen Film entwickelte Fotonegative bzw. Filmnegativstreifen. Mittels eines Belichtungsapparates werden mit Hilfe der Fotonegative Fotopositive auf Fotopapier als Fotoabzüge ausbelichtet. Ein solcher Belichtungsapparat wird in einem größeren zentralen kommerziellen Fotolabor als "Printer" bezeichnet. Mit einem solchen Printer werden von verschiedensten Kundenfilmen fortlaufend und gesteuert Fotopapierabzüge ausgesuchter Formate erstellt.

Der Weg zu entsprechenden Fotopapierabzügen führt für einen privaten Endverbraucher über den Fotohändler, der über eine Filmannahmestelle verfügt. Der Endverbraucher gibt seinen belichteten Film beim Fotohändler ab. Dieser Fotohändler ist Kunde eines zentralen Fotolabores, eines sogenannten Fotofinishers. Der Fotohändler tütet jeden einzelnen belichteten Endverbraucherfilm in einen entsprechenden Umschlag ein, auf dem er die Kundenwünsche für die Fotopapierabzüge vermerkt und sendet diese Umschläge an den Fotofinisher, der entsprechend die Fotopapierabzüge erstellt. Üblicherweise kann dann der Endverbraucher den aus seinem belichteten Film erstellten Negativfilm und die dazu erstellten Fotopapierabzüge nach ein oder zwei Tagen von seinem Fotohändler wieder abholen und bezahlen.

Beim Betrachten der erhaltenen Fotos stellt dann aber dieser Endverbraucher häufig fest, daß er zumindest von einzelnen der Fotos gerne weitere Abzüge haben möchte. Unter Umständen möchte er vielleicht weitere Fotopapierabzüge haben, wenn er schon nicht mehr im Besitz der zugehörigen Negative ist, weil er diese Negative entweder nie besessen hatte oder nicht ausreichend lange und gut archiviert hatte.

Auch ein Endverbraucher, der über Dias verfügt, könnte sich von einigen dieser Dias Fotopapierabzüge wünschen, um beispielsweise derartige Fotos mit einem geringeren Aufwand Freunden und Verwandten zeigen zu können oder sich in größerem Format rahmen zu lassen.

Für alle diese Fälle sind relativ aufwendigere Nachbestellungen notwendig, die auch beim Fotofinisher zu einer aufwendigeren und damit insbesondere oftmals auch teureren Bearbeitung führen.

Verfügt der Endverbraucher noch über das entsprechende Negativ, von dem er einen weiteren Fotopapierabzug will, so kann er dieses Negativ bei seinem Fotohändler abgeben, der es separat eintütet und die Nachbestellwünsche auf der Fototüte vermerkt. Dieser Auftrag geht dann wiederum an den Fotofinisher, der den entsprechenden Fotopapierabzug erstellt. Insbesondere, wenn es sich um ein größeres Format eines Fotopapierabzuges handelt, fällt diese Bearbeitung aus dem üblichen Rahmen des sozusagen endlos arbeitenden Fotopapierdruckers.

Verfügt der Endverbraucher nicht mehr über das Negativ, muß er eine sogenannte Bild-vom-Bild-Bestellung aufgeben. Dazu muß er sich entweder von dem vielleicht noch vorhandenen einzigen Exemplar des Fotopapierbildes trennen, mit der Gefahr, daß sein Papierabzug womöglich in der Fülle anderer Fotoaufträge verlorengeht, oder er muß unmittelbar beim Fotohändler eine Bildvom-Bild-Kopie anfertigen lassen. Die Fotohändler verfügen zum Teil hierfür über spezielle Kopierer. Eine solche Kopie hat aber letztendlich dann doch nicht die Qualität eines "echten" Fotopapierabzuges. Zudem ist der Andrang auf diese Kopierer oftmals sehr groß, so daß der Endverbraucher sein Foto doch für wenigstens mehrere Stunden abgeben muß. Auch dabei ist es schon vorgekommen, daß nicht jedes der in Auftrag gegebenen Fotos, beispielsweise am Abend des Geschäftstages, wiedergefunden und dem Endverbraucher ausgehändigt werden konnte.

Auch Dias, von denen der Endverbraucher Fotopapierabzüge wünscht, müssen in Form der einzigen beim Endverbraucher vorhandenen Originale eingesandt werden.

Noch schwieriger wird es, wenn der Endverbraucher von der bestimmten Bildaufnahme vielleicht spezielle Fotopapierabzüge wünscht, nämlich sogenannte "Fun-Produkte", z.B. eine Visitenkarte, Kalenderblätter, Glückwunsch- oder Einladungskarten oder dergleichen, jeweils mit einem Bildmotiv oder mehreren Bildmotiven seiner eigenen Bildaufnahmen.

Der Erfindung liegt die Aufgabe zugrunde, die Nachbestellung von Fotopapierabzügen, gegebenenfalls mit vielfältigeren Gestaltungsmöglichkeiten, zu erleichtern, ohne das gewohnte grundsätzliche Vorgehen eines durchschnittlichen Fotokunden gravierend zu entfremden.

Die erfinderische Lösung besteht darin, daß die Bildinformationen, die analog auf einem Bildträger vorliegen, mittels einer mit einem Scanner ausgerüsteten, lokal stationär im wesentlichen jedermann zugänglichen Leseeinheit in eine Datenverarbeitungseinrichtung eingelesen und für eine Datenübertragung in per Bildschirm präsentierbare digitale Bilddaten umgewandelt werden, wozu eine an sich bekannte und gegebenenfalls schon vorhandene Digitalstation verwendet wird und mit Eingabemöglichkeiten und Leseeinheiten für analoge Bildträger ausgerüstet und erweitert wird, die von einem kommerziellen Betreiber, insbesondere von einem Fotohändler, bereitgestellt wird.

Es können also beispielsweise Eingabemöglichkeiten für Filmnegative, bereits vorhandene Fotopapierabzüge oder auch Dias vorgesehen werden. Die auf diesen Bildträgern vorhandenen Bildinformationen werden gelesen und analog zu digital in der Digitalstation selbst umgewandelt, wonach sie dann genauso weiterbehandelt werden können, wie die digitalen Bildinformationen einer bereits digitalen Bildkamera, für deren Auslesen derartige Digitalstationen bereits Verwendung finden. Insbesondere könnten beispielsweise auch die Negative eines Negativfilmstreifens eingelesen und invertiert als positive Bilder auf einem Bildschirm erscheinen, wonach dann der Endverbraucher aus diesen Bildern noch einmal für ihn besser erkennbar die Bilder auswählen kann, von denen er tatsächlich eine Nachbestellung wünscht. Es ist ja bekanntermaßen insbesondere für private Fotografen oftmals sehr schwierig, aus den Negativen selbst zu erkennen, um welches Foto es sich überhaupt handelt, und welches Negativ insbesondere zu demjenigen Papierfoto, sich vielleicht nur wenig unterscheidender Fotos gehört, von dem er wirklich eine Nachbestellung wünscht. Diese Auswahl wird ihm durch den vorzugsweise vorhandenen Präsentationsbildschirm einer Digitalstation erheblich erleichtert.

Sind erst einmal die zunächst analog vorliegenden Bildinformationen in präsentierbare digitale Bilddaten umgewandelt worden, so stehen letztendlich dem Verwender eines solchen "Analogfilmes" dieselben Möglichkeiten mit der Digitalstation zur Verfügung, die auch dem Besitzer einer Digitalkamera zur Verfügung stehen. Zunächst einmal kann der entsprechende Endverbraucher seine eingescannten Bilder betrachten und beispielsweise auch einzelne Motive aus diesen Bildern auswählen, um sie z.B. für Bildkompositionen von "Fun-Produkten" zusammenzustellen. Er kann also auch bereits sich anhand der Präsentation vorstellen, wie beispielsweise eine fertige Visitenkarte, Glückwunschkarte, ein Kalenderblatt oder dergleichen mit seinem Foto aussehen wird. Für eine solche Präsentation ist zunächst einmal im Verhältnis kein allzu großer bilddatentechnischer Aufwand notwendig, weil die Bildinformationen nur in einer solchen Güte umgewandelt werden müssen, wie sie für die Präsentation auf dem Bildschirm ausreichend ist.

Aufgrund der Präsentation seiner Bilder kann dann der Endverbraucher diejenigen Bildmotive auswählen, von denen er Fotopapierabzüge bestellen will, wobei er entsprechend auch das gewünschte Produkt, mit beispielsweisen den gewünschten Formaten usw., auswählen kann. Aufgrund der getroffenen Auswahl wird dann die Digitalstation einen Nachbestellauftrag erzeugen.

Dieser Nachbestellauftrag kann z.B. ein ausgedruckter "Bestellschein" im weitesten Sinne sein. Ein Bestellschein kann jeder geeignete Träger sein, der mit entsprechend lesbaren Informationen versehen werden kann. Ein solcher Bestellschein könnte beim Fotohändler als Bestellung abgegeben werden. Der Bestellschein könnte in die gewohnte Fototüte eingelegt werden oder auf diese aufgeklebt werden. Es könnte auch gleich eine bedruckte Fototüte mit den entsprechenden Bestellinformationen bedruckt werden. Insbesondere könnten Strichcodes oder dergleichen für eine maschinenlesbare Bestellung erzeugt werden. Die so erzeugte Bestellung könnte dann mit dem entsprechenden Bildmaterial, z.B. den Filmnegativen, in an sich gewohnter Weise an den Fotofinisher abgesandt werden, der entsprechend der Bestellung die Fotopapierabzüge mit Hilfe der Bildinformationen erzeugt.

Die beim Fotofinisher vorhandenen Printer sind hochwertige Technologieprodukte, die aus jeder Bildvorlage für die Erzeugung eines Papierabzuges möglichst individuell das beste machen, indem beispielsweise die vorhandenen Bildinformationen verarbeitet, z.B. gefiltert werden, um weitgehend auch Filmfehler oder Aufnahmefehler des Endverbrauchers noch auszugleichen. Dafür ist ein relativ höherer bildverarbeitungstechnischer Aufwand notwendig. Trotzdem kann aber auch dieser Aufwand letztendlich dezentralisiert werden und bereits durch die Bildstation beim Fotohändler selbst vorgenommen werden, so daß nicht nur die Bildinformationen digitalisiert werden und die vom Endverbraucher ausgewählten Bestellinformationen festgehalten werden, sondern indem auch sozusagen die Steuerungsbefehle für den beim Fotofinisher vorhandenen Printer gleich auf der Grundlage der eingelesenen Bildinformationen von der Bildstation erkannt und festgehalten werden. Diese Gesamtinformationen können gleich als Bestellung in digitaler Form, z.B. über ISDN, an den Fotofinisher weitergegeben werden, so daß unter Wegfall der üblichen Bildtüten gleich die Fotopapierabzüge beim Fotofinisher erzeugt werden. Im Rahmen dieser erfindungsgemäßen Möglichkeit ist dann natürlich der Endverbraucher in der glücklichen Lage, unmittelbar nach Aufgabe der Bestellung sein wertvolles Original-Bildmaterial wieder mit nach Hause zu nehmen.

Eine nächste Weiterbildung der Erfindung besteht insbesondere darin, daß der Endverbraucher selbst den Auftrag auch endgültig absenden kann, ohne zuvor an der Kasse des Fotohändlers bezahlen zu müssen und eine Freigabe seines Auftrages zu erbitten. Dies wird dadurch ermöglicht, daß die weitergebildete Station auch über eine Bezahleinrichtung für den Kundenauftrag unmittelbar verfügt. Hierfür kommen im Prinzip bekannte Zahleinrichtungen, beispielsweise aus dem Bereich der Telekommunikation, in Betracht, also beispielsweise sowohl die Eingabemöglichkeit von Bargeld, als auch die Eingabemöglichkeiten von Kredit- oder Kundenkarten. Durch seine Bezahlung kann also der Endverbraucher seinen Auftrag selbst freigeben.

Bei Fotohändlern stehen bereits häufig die erwähnten Digitalstationen als Bilddaten-Einspeiseautomaten für Digital-Kameras zur Verfügung. An derartigen Digitalstationen können digitale Bildinformationen einer digitalen Bildkamera ausgelesen und eingespeist werden, entweder, indem die entsprechende Kamera über ein Verbindungskabel mit der Digitalstation verbunden wird, oder indem die entsprechende Speicherkarte aus der Kamera entnommen und, ggf. mit Hilfe eines Adapters, in ein entsprechendes Laufwerk der Digitalstation eingeführt wird.

Das Auslesen der digitalen Bildinformationen kann Aufnahme für Aufnahme auf einem Präsentationsbildschirm sichtbar gemacht, indem kurzzeitig die entsprechenden eingelesenen Aufnahmen sichtbar gemacht werden, Insbesondere können die einzelnen eingelesenen Aufnahmen beispielsweise in Form eines Zusammenschaubildes auf schachbrettartigen Feldern in einer Gesamtschau sichtbar gemacht werden, und der Endverbraucher kann selbst, ggf. mit Hilfestellung durch den Fotohändler, auswählen, von welchen der eingelesenen Bilder er tatsächlich Fotoabzüge haben will, welches Format diese Fotopapierabzüge haben sollen, auf welcher Art von Papier, beispielsweise matt oder glänzend, diese Fotopapierabzüge erstellt werden sollen und in welcher Anzahl pro Bildaufnahme die Fotopapierabzüge erstellt werden sollen. Es werden also in die Digitalstation letztendlich auch die zusätzlichen Informationen eingegeben, die bei analogen belichteten Filmen der Fotohändler auf der entsprechenden Filmtüte vermerkt. Beispielsweise könnte die Digitalstation über einen so genannten Touch-Screen verfügen, so daß entsprechende auf dem Bildschirm vorgegebene Auswahlmöglichkeiten nur durch Berühren des Bildschirmes ausgewählt werden können.

Die über die Digitalstation eingelesenen Bildinformationen können über an sich vorhandene Datennetze an den Fotofinisher abgesandt werden. In Frage kommt hierfür beispielsweise ein herkömmliches ISDN-Telefonnetz. Beispielsweise könnten die Bilddaten zunächst in der Digitalstation gespeichert bleiben und dann zu günstigen Telekommunikationszeiten an den Fotofinisher gesammelt abgesandt werden. Die Übermittlung erfolgt also quasi nach Art einer e-mail.

Da die Bildinformationen mit den zusätzlichen Informationen über die Fotopapierabzüge entsprechend bereits digital beim Fotofinisher eintreffen, muß dort nicht die eingegangene Information als Auftrag von einer Bedienungsperson ausgelesen werden und entsprechend in eine Ausführungsarbeit umgesetzt werden, sondern es kann durch die übermittelten Daten selbst bereits der Auftrag mit den beim Fotofinisher vorhandenen Maschinen umgesetzt werden. Es kann also beispielsweise unmittelbar der Fotoprinter beim Fotofinisher durch die übermittelten Daten gesteuert in Betrieb gesetzt werden, um den Auftrag auszuführen. Beim Fotofinisher ist somit nicht mehr im eigentlichen Sinne eine Bedienungsperson notwendig, sondern allenfalls eine Überwachungsperson.

Die Digitalstationen sind, beispielsweise im Geschäftslokal des Fotohändlers, im Prinzip für jedermann lokal stationär zugänglich, so daß jedermann durch die Digitalstation entsprechend Aufträge an den Fotofinisher vergeben kann. Es werden also mit Hilfe der Digitalstation ggf. unmittelbar Leistungen des Fotofinishers abgefragt, in Auftrag gegeben und in Gang gesetzt. Dadurch besteht die Gefahr einer unbezahlten Leistungserschleichung, nicht unbedingt zum Nutzen des den Auftrag vergebenden Endverbrauchers, aber unter Umständen zum Schaden des Fotofinishers. Um also entsprechende Schabernak-Aufträge zu vermeiden, könnte im Bereich des Fotohändlergeschäftes so vorgegangen werden, daß der Kunde nicht unmittelbar die Absendung seines Auftrages an den Fotofinisher selbst bewirken kann. Vielmehr kann er dann seinen Auftrag nur mit Hilfe der Digitalstation einlesen, und muß dann diesen Auftag zunächst einmal an der Kasse des Fotohändlers bezahlen. Hierfür kann der Endverbraucher beispielsweise von der Digitalstation automatisch ausgedruckt eine entsprechende Zahlungsanweisung erhalten, mit der er zur Kasse gehen kann. Erst wenn er diese Zahlungsanweisung bezahlt hat, kann der Fotohändler selber den nunmehr bezahlten Auftrag des Endverbrauchers per Knopfdruck zur Absendung an den Fotofinisher freigeben. Dazu kann an der Kasse des Fotohändlers eine Art Freigabegerät liegen, das beispielsweise über ein Kabel mit der Digitalstation verbunden ist. Wie im Vorhergehenden geschildert, könnte die Freigabe aber alternativ durch eine Bezahlung automatisiert erfolgen, und somit letztendlich doch vom Fotokunden selbst bewirkt werden.

Der Vorteil der erfindungsgemäßen Lösung besteht insbesondere darin, daß der Fotokunde, und zwar ein herkömmlicher, normaler Fotokunde, der nicht professionell, aber relativ regelmäßig, z.B. im Urlaub, Fotos macht, die von ihm gewünschte Nach bestellung selbständig veranlassen kann, indem er eine Digitalstation bei seinem Fotohändler nutzt, ohne daß er die Vorlagen für seine Nachbestellungen aus der Hand geben muß. Er kann diese Vorlagen nach der Abgabe des Nachbestellauftrages wieder unverändert mit nach Hause nehmen.

Der weitere Vorteil besteht darin, daß er die gewohnte Vorgehensweise grundsätzlich nicht ändern muß. Dies bedeutet, er kann nach wie vor zu seinem gewohnten Fotohändler gehen und kann beispielsweise seine Fotos auch bei diesem Fotohändler wieder abholen, wenn sie vom Fotofinisher angefertigt sind. Allerdings könnte er seine Fotos auch unmittelbar nach Hause senden lassen. Er hat es aber bei der erfindungsgemäßen Lösung insbesondere in der Hand, die Nachbestellung durch den erfinderischen Fernauftrag selbst zu steuern und mit ihren Parametern vorzugeben. Er weiß also, wie das bestellte Endprodukt tatsächlich aussieht, und daß dieses Endprodukt seinen Vorstellungen entspricht. Er kann Fehler beim Fotohändler und beim Fotofinisher vermeiden, indem er die wesentlichen Daten selbst eingibt, wobei er durch die Darstellung auf dem Präsentationsbildschirm auch ganz genau weiß und fotografisch erkennen kann, wie sich diese Parameter auswirken bzw. wie das Endprodukt aussehen wird.

Gleichzeitig muß er aber für diese für ihn sicherere und bequemere Nachbestellung keine größeren finanziellen Investitionen tätigen, wie er es beispielsweise tun müßte, wenn er eine neue Digital-Kamera erwerben würde, oder er zuhause einen Computer bereitstellen würde, der selbst über einen entsprechenden Scanner verfügt und mit dem er dann beispielsweise über das Internet mit seinen Fotofinisher kommunizieren könnte. Er ist auch nicht darauf angewiesen, sicherheitshalber derartige Nachbestellungen mit seinem Computer selbst, beispielsweise per Farbdrucker, auszuführen, was zu einer durchaus mäßigeren Bildqualität führen würde, als die vom Fotofinisher professionell erstellten Fotos aufweisen, und die er entsprechend gewohnt ist.

Es sind nämlich bereits verschiedene Verfahren bekannt, die eine Nachbestellung für einen Kunden verbessern sollen, wobei aber diese bekannten Verfahren die im Vorhergehenden angedeuteten Probleme für den Kunden mit sich bringen.

Zum Beispiel ist aus der US-A 5 666 215 bekannt, über einen Heimcomputer mit dem Fotofinisher Kontakt aufzunehmen, allerdings nur zur Kontrolle der Bearbeitung beim Fotofinisher. Zuvor werden nämlich die Filmnegative in gewohnter Weise zu dem Fotofinisher gesandt. Dieser Fotofinisher erstellt bei sich selbst digitale Bildinformationen, die er auf den Heimcomputer des Kunden senden kann, damit dieser Fotokunde anhand der übersandten Bildinformationen kontrollieren kann, ob der von ihm gegebene Auftrag zu seiner Zufriedenheit ausgeführt wird bzw. seinen Vorstellungen entspricht. Dies setzt aber für den Fotokunden voraus, daß er nicht nur über einen geeigneten Computer verfügt, der auch die dafür notwendige Telekommunikation und die Fotodarstellung erlaubt, sondern es setzt bei dem Fotokunden auch eine Gewöhnung an eine solche Computerarbeit voraus und beispielsweise eine regelmäßige Abfrage von e-mails oder dergleichen. Da aber für die meisten normalen Fotokunden das Fotografieren nicht unbedingt im Zusammenhang mit multimedialen Einrichtungen im Haushalt steht und sicherlich noch die meisten Fotokunden nicht gewillt sind, sich entsprechend auszurüsten und zu investieren, bietet also die aus der genannten Druckschrift entnehmbare bekannte Vorgehensweise nur ein Angebot für einen sehr ausgesuchten Kundenkreis.

Die Alternative, die in der Einleitung der US-A 5 666 215 angedeutet ist (Spalte 1, Zeilen 15 bis 21), und die beispielsweise auch aus der DE-A 41 03 721 zu entnehmen ist, besteht darin, ein Klein-Laboratorium zu verwenden, das beispielsweise bei einem Fotohändler bereitgestellt wird, wie dies auch als Möglichkeit eingangs geschildert worden ist. Eine solche Alternative bringt aber üblicherweise doch Qualitätseinbußen und Einbußen bei den Gestaltungsmöglichkeiten im Hinblick auf das Ergebnis eines Nachbestellauftrages mit sich.

Die erfindungsgemäße Lösung bringt also ein Optimum an Gewohnheit, Sicherheit und Qualität für den Fotokunden bei der Nachbestellung mit sich.

Zuletzt sei noch angemerkt, daß eine solche Digitalstation zwar aus Schutz vor Beschädigungen üblicherweise im Geschäftslokal eines Fotohändlers angeordnet sein wird, daß es aber durchaus denkbar wäre, derartige Digitalstationen auch anderweitig aufzustellen, ähnlich wie Telefonzellen, z.B. an Bahnhöfen, auf Marktplätzen oder dergleichen. Eine solche Aufstellung könnte dann auch von einem kommerziellen Betreiber erfolgen, der vielleicht nicht originär Fotohändler ist, sondern allgemein Automatenaufsteller ist.

## Patentansprüche

1. Verfahren zur Erstellung von Fotos auf Fotopapier durch einen Fotofinisher (zentrales Fotolabor) auf der Grundlage von Bildinformationen, die analog auf einem Bildträger, insbesondere einem Papierfoto, einem Filmnegativ oder einem Dia vorliegen, wobei die Bildinformation mittels einer mit einem Scanner ausgerüsteten Leseeinheit in eine Datenverarbeitungseinrichtung eingelesen werden und in per Bildschirm präsentierbare digitale Bilddaten umgewandelt werden,
**dadurch gekennzeichnet,**
daß der Bildträger von einem Fotokunden für eine Nachbestellung eines Fotos auf Fotopapier in die Leseeinheit eingegeben wird, die wie die mit ihr verbundene Datenverarbeitungseinrichtung und der Bildschirm, Bestandteil einer lokal stationär im wesentlichen jedermann zugänglichen Digitalstation eines kommerziellen Betreibers ist,
daß der Fotokunde mit Hilfe der Präsentation der Bilddaten auf dem Bildschirm seine Auswahl für das nachzubestellende Foto im Hinblick auf Identifikation, Anzahlung und Ausführungsform trifft,
daß die Auswahl des Fotokunden in einen Nachbestellauftrag umgesetzt wird, der zur Steuerung eines Fotoprinters beim Fotofinisher genutzt wird,
und daß das fertige Foto in gewohnter Weise vom Fotofinisher an den kommerziellen Betreiber oder unmittelbar an den Fotokunden gesandt wird.

2. Verfahren nach Anspruch 1, dadurch gekennzeichnet, daß der Nachbestellauftrag mit der Bildinformation als Gesamtinformation an den Fotofinisher digital übermittelt wird.

3. Verfahren nach Anspruch 1, dadurch gekennzeichnet, daß eine Freigabe der Übermittlung der Gesamtinformation bzw. des Nachbestellauftrages an den Fotofinisher erst dann erfolgt, wenn eine Vorabbezahlung durch den Fotokunden bewirkt worden ist.
